# NEUE EUROPÄISCHE PATENTSCHRIFT

(11) **EP 1 802 224 B2**
(45) Veröffentlichungstag und Bekanntmachung des Hinweises auf die Entscheidung über den Einspruch: **25.08.2010**
(45) Hinweis auf die Patenterteilung: 23.01.2008
(21) Anmeldenummer: 05798549.1
(22) Anmeldetag: 11.10.2005
(51) Int. Cl.: A47J 31/60, B01D 24/10, C02F 1/00

(54) **FILTERKARTUSCHE**
FILTER CARTRIDGE
CARTOUCHE A FILTRE

(30) Priorität: 13.10.2004 DE 102004049876
(43) Veröffentlichungstag der Anmeldung: 04.07.2007
(73) Patentinhaber: Brita GmbH, 65232 Taunusstein (DE)
(72) Erfinder: NAMUR, Marc, 64297 Darmstadt (DE)
(74) Vertreter: Fuchs
(86) Internationale Anmeldenummer: PCT/EP2005/010915
(87) Internationale Veröffentlichungsnummer: WO 2006/040121

(56) Entgegenhaltungen:
- EP-A2- 0 992 459
- WO-A-99/01220
- DE-A1- 4 422 709
- DE-U1- 8 713 769
- GB-A- 1 543 590
- US-A- 5 855 777
- US-A1- 2003 159 979
- US-B1- 6 533 931
- PATENT ABSTRACTS OF JAPAN Bd. 1997, Nr. 11, 28. November 1997 (1997-11-28) & JP 09 174050 A (KURITATSUKU KK), 8. Juli 1997 (1997-07-08)

## Beschreibung

Die Erfindung betrifft eine Filterkartusche, insbesondere Saugfilterkartusche, gemäß dem Oberbegriff des Patentanspruchs 1. Der Einlaufbereich und die Auslauföffnung der Filterkartusche sind im Bodenbereich der Filterkartusche angeordnet, was auch einen seitlichen Zulauf oder Auslauf in einem unteren, dem Boden benachbarten Abschnitt von Aufström- und Abströmkammer einschließt.

Saugfilterkartuschen werden in Wasserbehälter von Getränkemaschinen, z. B. für Heißgetränke, eingesetzt, die über eine Saugpumpe verfügen, wie z. B. Kaffeemaschinen u. a. Die Ein- und Auslauföffnungen der Saugfilterkartusche befinden sich im Bodenbereich des ansonsten vollständig gekapselten Kartuschengehäuses. Im Wasserbehälter des Gerätes befindet sich ein an die Auslauföffnung angepasstes Sitzelement, das ein eigenständiges Bauteil sein kann oder das an den Wasserbehälter angeformt ist. Dieses Sitzelement besitzt ebenfalls eine Auslassöffnung, durch die das filtrierte Wasser aus dem Wasserbehälter abfließen kann. Das Sitzelement dient als Aufnahme für die Saugfilterkartusche, die in dieses Sitzelement eingesetzt wird.

Da die Auslauföffnung des Wasserbehälters an die Saugpumpe des Gerätes angeschlossen ist, wird das zu filtrierende Wasser aus dem Wasserbehälter in die Kartusche gesaugt, durchströmt in der Kartusche das oder die Filtermedien und gelangt filtriert zur Auslassöffnung.

Aus der WO 99/01220 ist eine Saugfilterkartusche bekannt, wobei die Wassereintrittsöffnung unten angeordnet ist und ein Durchgang für das Wasser durch das Filtermedium im Aufstrom vorhanden ist. Weiterhin ist eine absteigende Fallleitung zur Führung des Wassers zu einem unten befindlichen Entnahmeanschluss des Wasserbehälters vorgesehen. Dabei wird das Filtermittelgemisch, das aus Aktivkohle und Ionentauscher besteht, während des Betriebs nach oben hin aufgeschwemmt, was einer Bettverdichtung des Filterbettes entgegenwirkt.

Die Fallleitung ist zentral innerhalb der Saugfilterkartusche angeordnet, so dass der Bodenanschluss der Saugfilterkartusche ebenfalls zentral erfolgen kann. Hierbei ist die Zuflussöffnung in der Saugfilterkartusche ringförmig angeordnet.

Je nach der vom Standort der Getränkemaschine abhängigen Wasserqualität und der gewählten Kaffeesorte kann unter Umständen vollständig entkarbonisiertes Wasser nicht optimal für die Entfaltung des Aromas sein, und auch die Maschinenteile können in Mitleidenschaft gezogen werden. Wenn die Entkarbonisierung nämlich nicht angepasst ist, kann es im schlimmsten Fall zu Korrosion an den metallischen Bauteilen kommen, so dass hohe Wartungs- und Reparaturkosten die Folge sind.

Aus der DE 44 22 709 A1 ist eine Filtervorrichtung, insbesondere eine Filterkartusche bekannt, mit der eine Wasserfiltrierung und/oder Wasserenthärtung aber auch der Durchfluss normalen, unbehandelten Rohwassers möglich ist. Die Vorrichtung weist mindestens zwei Kammern auf, die durch eine in Richtung der Längsachse des Hohlkörpers verlaufende Wand voneinander getrennt sind. Die eine Kammer ist mit einem Filtermittel gefüllt, während die andere Kammer ein anderes Filtermittel enthalten oder auch leer sein kann. Im oberen Zulaufbereich ist ein drehbarer Ring mit Öffnungen vorgesehen, die mit Öffnungen der Kammern zur Deckung gebracht werden können, um das zu behandelnde Wasser in die entsprechenden Kammern strömen zu lassen. Alternativ können auch die im unteren Bereich der Vorrichtung angeordneten Auslauföffnungen mit einer verstellbaren Einrichtung versehen sein.

Der Durchfluss des zu behandelnden Wassers kann durch Schwerkraft oder durch den Druck des aus einem Wasserhahn entnehmbaren Wassers bewirkt werden. Es handelt sich somit nicht um eine Saugfilterkartusche. In allen Fällen sind daher die Einlauf- und die Auslauföffnung auf gegenüberliegenden Seiten der Filtervorrichtung angeordnet, so dass im Fall eines Bypasses eine leere Kammer bereitgestellt werden muss.

Für Saugfilterkartuschen, die in einem beengten Wasserbehälter eingesetzt werden müssen und dementsprechend kompakt ausgelegt werden müssen, ist eine derartige Bypasseinrichtung jedoch nicht praktikabel.

Es ist Aufgabe der Erfindung, eine Filterkartusche, insbesondere Saugfilterkartusche, bereitzustellen, bei der der gewünschte Karbonisierungsgrad an die jeweilige Qualität des Rohwassers angepasst werden kann.

Diese Aufgabe wird mit einer Filterkartusche, insbesondere Saugfilterkartusche, gelöst, deren Auslauföffnung mit dem Einlaufbereich über einen Bypass verbunden ist, der in einem unteren Abschnitt der Aufströmkammer und/oder der Abströmkammer oder unterhalb von Aufström- und/oder Abströmkammer angeordnet ist.

Vorzugsweise ist der Querschnitt des Bypasses einstellbar ausgebildet.

Der einstellbare Bypass ist vorzugsweise derart dimensioniert, dass nicht das gesamte Rohwasser unmittelbar vom Einlaufbereich in die Auslassöffnung strömt. Vorzugsweise ist der Bypass derart ausgelegt, dass max. 50 % des Rohwasssers zur Auslauföffnung abgezweigt werden können.

Mit Hilfe des Bypasses kann die Leistung der Kartusche an die Wasserqualität angepasst werden, so dass ein für den Geschmack und für die Getränkemaschine optimales Wasser entnommen werden kann.

Die Anordnung des Bypasses im unteren Abschnitt der Abströmkammer oder unterhalb der Abströmkammer hat den weiteren Vorteil, dass kein zusätzlicher Platz benötigt wird, so dass die horizontalen Abmessungen der bekannten Filterkartuschen, insbesondere Saugfilterkartuschen, beibehalten werden können.

Vorzugsweise weist die Auslauföffnung einen Auslaufstutzen auf, wobei der Einlaufbereich den Auslaufstutzen ringförmig umgibt.

In einer bevorzugten Ausführungsform weist der Auslaufstutzen mindestens einen drehbaren Stellring auf.

Gemäß einer ersten Variante weist der Auslaufstutzen mindestens eine erste Öffnung auf. Der Stellring weist einen zylindrischen, am Auslaufstutzen anliegenden Abschnitt auf, an dem sich vorzugsweise ein Verschlusselement oder in dem sich vorzugsweise mindestens eine zweite Öffnung befindet, die mit der ersten Öffnung zur Deckung bringbar ist. In diesem Fall bilden erste und zweite Öffnung/en zusammen die Bypass-Öffnung/en. Zusätzliche Leitungen, Rohre oder Kammern für die Realisierung des Bypasses sind nicht erforderlich.

Durch Verdrehen des Stellrings lässt sich der Querschnitt der ersten Öffnung des Auslaufstutzens verändern, so dass die zugemischte Menge des unbehandelten Rohwassers zu dem durch das Filtermittel der Filterkartusche behandelten Wasser gezielt eingestellt werden kann. Mit Hilfe eines solchen Bypasses kann die Leistung der Filterkartusche an die Wasserqualität angepasst werden, so dass ein für den Geschmack und für die Getränkemaschine optimales Wasser entnommen werden kann.

Zusätzlich steigert der integrierte Bypass die Kapazität der Filterkartusche. Wird aufgrund der Wasserqualität weniger Leistung benötigt, so ist dies einstellbar und die Filterkartusche enthärtet auf längere Zeit auf gleichem Niveau.
Weiterhin ist es vorteilhaft, wenn die zweite Öffnung des Stellrings ≥der ersten Öffnung des Auslaufstutzens ist.

Der zylindrische Abschnitt des Stellrings liegt vorzugsweise dichtend an der Außenseite des Auslaufstutzens an. Dadurch wird verhindert, dass bei geschlossenen ersten Öffnungen unbeabsichtigt Rohwasser insbesondere durch die zweiten Öffnungen des Stellrings zwischen dem Stellring und dem Auslaufstutzen in die Auslauföffnung gelangen kann.

Eine zweite Variante sieht mindestens eine Bypassöffnung in der Bodenwand der Abströmkammer vor. Die Bypassöffnung wird vorzugsweise von einem am Stellring angeordneten Verschlusselement verschlossen, wobei durch Verdrehen des Stellrings die durch die Bypassöffnung strömende Rohwassermenge eingestellt werden kann.

Das Verschlusselement kann eine am Stellring angeordneter teilringförmiger Bund sein, der vorzugsweise dichtend an der Unterseite der Bodenwand der Abströmkammer anliegt.

Anstelle eines Verschlusselements kann - wie bei der ersten Variante - der Bund eine oder mehrere zweite Öffnung/en aufweisen, die mit der Öffnung/en in der Bodenwand der Abströmkammer zur Deckung bringbar ist/sind.

Das Rohwasser gelangt im Unterschied zur ersten Variante nicht unmittelbar in den Auslaufstutzen, sondern wird in das Innere der Abströmkammer geleitet, wodurch die Möglichkeit eröffnet wird, auch dieses Rohwasser einer Filtration zu unterziehen.

Wie weit das Rohwasser in den Innenraum der Abströmkammer eingeleitet wird, kann durch die Länge eines die Bypassöffnung umgebenden Steigrohrs definiert werden. Der untere Bereich der Abströmkammer wird somit vom bereits filtrierten und vom über die Bypassöffnung eingeleiteten Rohwasser gemeinsam genutzt.

Dieser gemeinsam genutzte Bereich kann eine Schüttung aus Aktivkohle zur Entchlorung des Bypasswassers aufweisen. Je nach Art und Form des Schüttungsmaterials kann auf der Schüttung eine Trennschicht angeordnet sein, die beispielsweise aus einem Vlies bestehen kann, um eine Vermischung mit dem gegebenenfalls darüber angeordneten Filtermittel, z. B. aus fonenaustauschermaterial, zu verhindern.

Dieser gemeinsam genutzte Bereich innerhalb der Abströmkammer kann durch einen flüssigkeitsdurchlässigen Zwischenboden abgetrennt sein. In der zwischen Boden und Zwischenboden gebildeten Kammer kann ein Filtermedium, insbesondere aus einem Aktivkohlevlies, angeordnet sein.

Der Auslaufstutzen mit Stellring kann in weiterer Ausgestaltung der Erfindung vorteilhaft auch zur Fixierung der Filterkartusche auf einem Sitzelement genutzt werden, wenn in der Auslauföffnung ein nach innen weisender, umlaufender Schnapprand vorgesehen ist, der von einer ersten unteren Schnappposition in eine obere zweite Schnappposition und umgekehrt umklappbar ist.

Das dazugehörige Sitzelement ist gekennzeichnet durch einen, in die Auslauföffnung der Filterkartusche eingreifenden Rohrstutzen, der mindestens ein Betätigungselement aufweist, das beim Aufsetzen der Filterkartusche den Schnapprand von der ersten unteren Schnappposition in die zweite obere Schnappposition bewegt, in der der Schnapprand abdichtend und klemmend am Rohrstutzen anliegt.

Vorzugsweise ist das Betätigungselement eine am Rohrstutzen angeordnete Ringschulter.

Die Saugfilterkartusche wird mit dem in unterer Schnappposition befindlichen Schnapprand von oben auf das Sitzelement aufgesetzt und soweit nach unten gedrückt, bis der Schnapprand nach oben umklappt und hierbei am Rohrstutzen des Sitzelementes angreift. Das Sitzelement ist derart an den Schnapprand angepasst, dass bei umgeklapptem Schnapprand die Saugfilterkartusche abdichtend am Rand des Rohrstutzens anliegt und fixiert ist. Das Umklappen signalisiert dem Benutzer, dass die Filterkartusche ihre vorgegebene Dichtposition eingenommen hat. Es wird somit eine Fehlpositionierung durch den Benutzer verhindert.

Zum Entfernen der Filterkartusche wird diese lediglich nach oben herausgezogen, wobei der Schnapprand in seine untere Schnappposition zurückklappt.

Durch den Umklappvorgang des Schnapprandes werden radiale Kräfte auf den Auslaufstutzen ausgeübt, die zu einer Aufweitung und unter Umständen in der oberen zweiten Schnappposition zu einem Nachlassen der Klemmkräfte führen könnten. Der Stellring übernimmt daher zusätzlich die Funktion der Stabilisierung des Auslaufstutzens.

Vorzugsweise ist der Schnapprand am unteren Ende des Auslaufstutzens angelenkt.

Der Schnapprand kann über ein Filmscharnier angelenkt sein.

Vorzugweise ist der Schnapprand ein sich radial nach innen erstreckender flacher Randstreifen.

Der Randstreifen ist vorzugsweise als Ring ausgeführt.

Der Schnapprand nimmt zwei stabile Positionen ein, nämlich eine untere und eine obere Position. In der Mittelposition nimmt der Schnapprand eine labile Position ein, von wo er aufgrund seiner Spannung von selbst entweder in die eine oder die andere Position umklappt. Der Schnapprand besteht vorteilhafterweise aus einem elastischen Kunststoff.

Vorteilhafterweise besitzt der Stellring einen in die Auslauföffnung ragenden, abgewinkelten Bund, an dem der Schnapprand in seiner ersten unteren Schnappposition anliegt. Dadurch wird eine definierte Ausgangsposition für den Schnapprand gewährleistet.

Der Stellring liegt vorzugsweise dichtend auf dem Auslaufstutzen an. Dadurch wird verhindert, dass insbesondere bei geschlossenen ersten Öffnungen unbeabsichtigt Rohwasser durch die zweiten Öffnungen des Stellrings zwischen dem Stellring und dem Auslaufstutzen in die Auslauföffnung gelangen kann.

Sowohl die Aufströmkammer als auch die Abströmkammer weisen mindestens ein Filtermittel auf. Es hat sich als vorteilhaft herausgestellt, dass die Aufströmkammer ein Wirbelbett und die Abströmkammer ein Festbett aufweisen.

Der Vorteil der Ausstattung beider Filterkammem mit Filtermitteln liegt darin, dass auf die im Stand der Technik verwendeten Fall- bzw. Steigrohre, die sich über die gesamte Höhe der Filterkartusche erstrecken, verzichtet werden kann. In der Aufströmkammer stellt sich durch das Wirbelbett nur ein geringer Druckverlust ein.

Vorteilhafterweise weist der Auslaufstutzen und/oder Stellring, vorzugsweise unterhalb der ersten Öffnung, mindestens einen sich um den Umfang erstreckenden Dichtwulst auf, so dass ein ungewollter Bypass verhindert wird.

Beispielhafte Ausführungsformen der Erfindung werden nachfolgend anhand der Zeichnungen näher erläutert. Als Beispiel für die erfindungsgemäße Filterkartusche wird eine Saugfilterkartusche beschrieben.

Es zeigen:
- Fig. 1: eine perspektivische Ansicht einer Saugfilterkartusche mit angesetztem Sitzelement,
- Fig. 2a: einen Vertikalschnitt durch die in Fig. 1 gezeigte Saugfilterkartusche mit angesetztem Sitzelement,
- Fig. 2b: eine vergrößerte Darstellung des Auslaufbereichs der in der Fig. 2a gezeigten Saugfilterkartusche,
- Fig. 3: einen Vertikalschnitt durch die in den Fig. 1 und 2a, b gezeigte Saugfilterkartusche ohne Sitzelement,
- Fig. 4: eine vergrößerte perspektivische Darstellung des unteren Bereichs der in den Fig. 1 bis 3 gezeigten Saugfilterkartusche, teilweise im Schnitt,
- Fig. 5: eine perspektivische Draufsicht auf das in den Fig. 1 und 2a, b gezeigte Sitzelement,
- Fig. 6: eine vergrößerte Schnittdarstellung des unteren Bereichs einer Saugfilterkartusche gemäß einer weiteren Ausführungsform,
- Fig. 7: eine perspektivische Unteransicht auf die Auslauföffnung der Saugfilterkartusche.

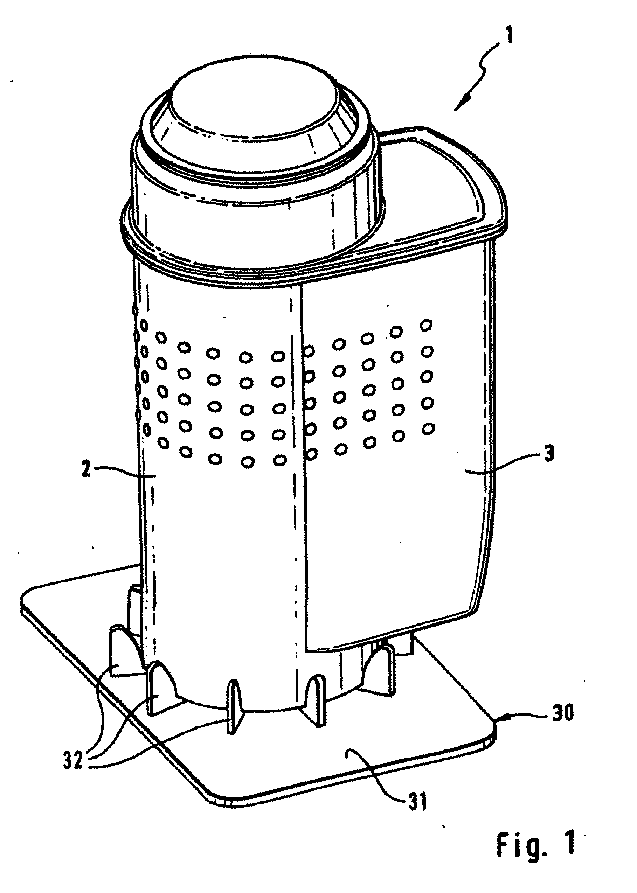

In der Figur 1 ist eine Saugfilterkartusche 1 in Seitenansicht dargestellt. Die Saugfilterkartusche 1 besitzt ein zentrales Gehäuseteil 2, das die Abströmkammer 2a aufweist, und ein an das Gehäuseteil 2 seitlich angesetztes Gehäuseteil 3. Die versetzte Anordnung der Gehäuseteile 2 und 3 hat den Zweck, dass bei geringer Breite des Wasserbehälters, in den die Saugfilterkartusche 1 eingesetzt wird, die Auf- und Abströmkammern mit großem Volumen ausgebildet werden können.

Die Saugfilterkartusche 1 sitzt auf einem Sitzelement 30 auf, das sich in oder an der Auslauföffnung des Wasserbehälters (nicht dargestellt) befindet. Eine ebenfalls nicht dargestellte Saugpumpe ist an die Auslauföffnung angeschlossen. Im Betrieb wird Wasser aus dem Wasserbehälter in die Saugfilterkartusche 1 gesaugt und durch die Auslauföffnung abgezogen. Das Sitzelement 30 kann auch integraler Bestandteil des Wasserbehälters sein. Das Sitzelement 30 besitzt eine Grundplatte 31, auf der kranzförmig Positionierelemente 32 angeordnet sind, was nachfolgend noch eingehender beschrieben wird.

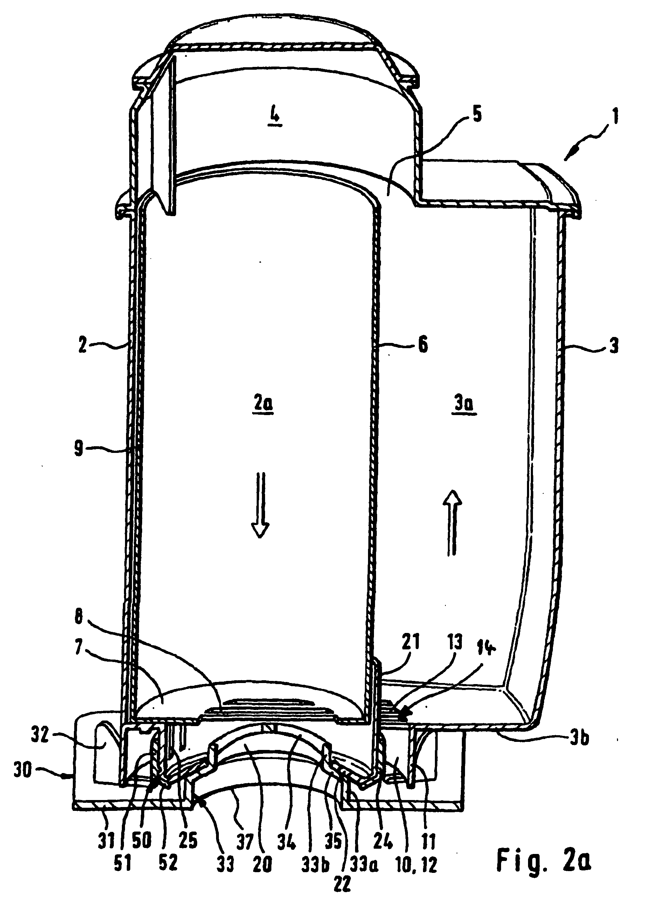

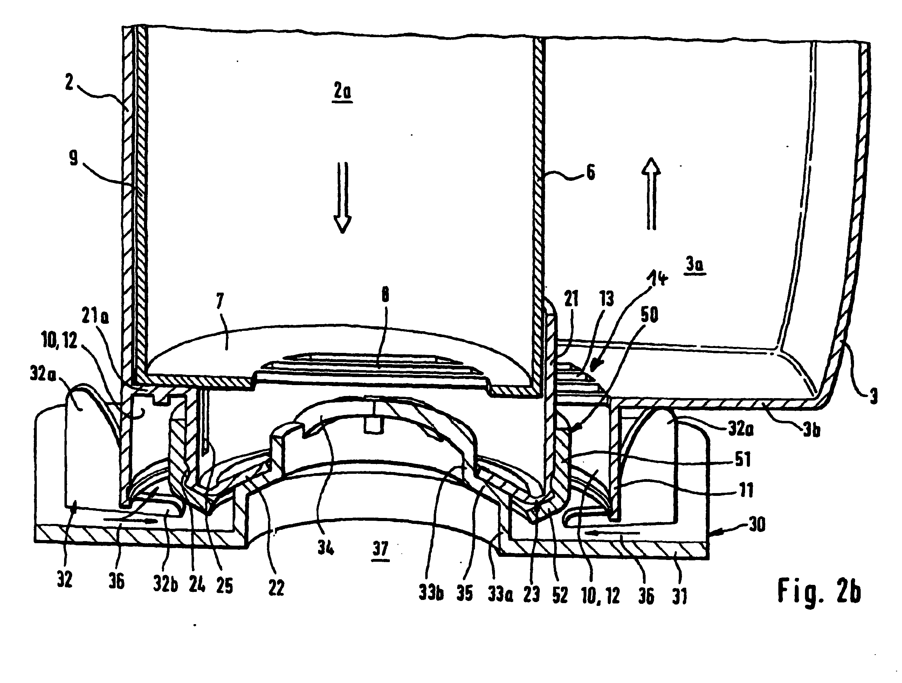

In den Figuren 2a, b ist ein Vertikalschnitt durch die in Fig. 1 gezeigte Saugfilterkartusche 1 mit angesetztem Sitzelement 30 dargestellt. Im zentralen Gehäuseteil 2 befindet sich die Abströmkammer 2a, die mit einem Festbett als Filtermaterial gefüllt sein kann. Im angesetzten Gehäuseteil 3 mit Bodenwand 3b befindet sich die Aufströmkammer 3a, die als Filtermaterial ein Wirbelbett enthalten kann. Diese Aufströmkammer 3a ist mittels einer vertikal angeordneten Trennwand 6 von der Abströmkammer 2a abgeteilt. In der hier gezeigten Ausführung ist die Trennwand 6 Bestandteil der Umfangswand des Abströmeinsatzes 9, der außerdem eine Bodenwand 7 mit zentral angeordneten Bodengitter 8 aufweist. Beide Kammern 2a, 3a sind über eine im oberen Bereich der Saugfilterkartusche 1 angeordnete Verbindungskammer 4 mit Verbindungsöffnung 5 verbunden.

Im unteren Bereich der Saugfilterkartusche 1 ist der Einlaufbereich 10 angeordnet, der als Ringkanal 12 ausgebildet ist. Dieser Ringkanal 12 wird durch eine nach unten vorstehende, am zentralen und angesetzten Gehäuse 2, 3, angeformte Ringwand 11 und einen die Auslauföffnung 20 der Abströmkammer 2a umgebenden Auslaufstutzen 21 gebildet. Der Ringkanal 12 mündet über ein Gitter 13 in der Bodenwand 3b in die Aufströmkammer 3a. Das Gitter 13 weist die Einlauföffnungen 14 auf.

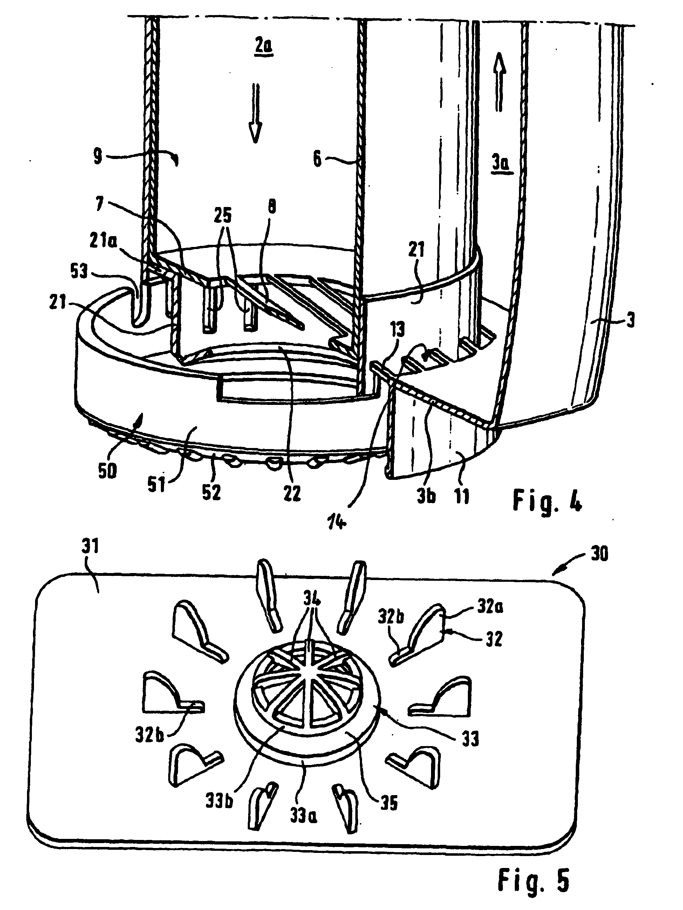

Der Auslaufstutzen 21 weist erste Öffnungen 25 auf, die den Einlaufbereich 10 bzw. den Ringkanal 12 mit der Auslauföffnung 20 verbinden. Es handelt sich hierbei um schlitzförmige Öffnungen 25, die über einen Abschnitt des Umfangs des Auslaufstutzens 21 verteilt angeordnet sind. Am unteren Ende des Auslaufstutzens 21 ist ein geschlossener ringförmiger Schnapprand 22 über ein Filmscharnier 23 angelenkt, der radial nach innen in die Auslauföffnung 20 vorsteht. An der Außenwand des Auslaufstutzens 21 liegt ein Stellring 50 an, der einen zylindrischen Abschnitt 51 und einen nach innen, schräg abgewinkelten Bund 52 aufweist. Im zylindrischen Abschnitt 51 sind zweite Öffnungen 53 (siehe auch Fig. 4) angeordnet, die durch Drehen des Stellrings 50 mit den ersten Öffnungen 25 zur Deckung gebracht werden können. Erste und zweite Öffnungen 25, 53 bilden zusammen die Bypassöffnungen.

Das Sitzelement 30 weist einen seine Auslassöffnung 37 umgebenden Rohrstutzen 33 auf, der aus einem unteren Abschnitt 33a und einem durchmesserreduzierten Abschnitt 33b besteht. Zwischen beiden Abschnitten 33a, 33b ist eine, schräg nach oben weisende Ringschulter 35 angeordnet, die das Betätigungselement für den Schnapprand 22 bildet. Stege 34 überspannen die Auslassöffnung 37 am oberen Abschnitt 33b.

Beim Aufsetzen der Saugfilterkartusche 1 auf das Sitzelement 30 wird der Schnapprand 22 von der Ringschulter 35 erfasst und nach oben in seine zweite Schnappposition umgeklappt, in der er abdichtend und klemmend auf dem Abschnitt 33b des Rohrstutzens 33 anliegt, wodurch die Saugfilterkartusche 1 fixiert wird. Der Außendurchmesser des Abschnitts 33b ist geringfügig größer als der Innendurchmesser des Schnapprandes 22 in seiner zweiten Schnappposition, damit die gewünschten Klemmkräfte auftreten. Zusätzliche Dichtelemente sind nicht erforderlich.

Bei gefülltem Wasserbehälter bzw. abgeschalteter Saugpumpe kann die Saugfilterkartusche nicht aufschwimmen. Zusätzliche Fixierungs- und Befestigungsmittel für die Saugfilterkartusche 1 sind daher nicht erforderlich.

Das Sitzelement 30 weist Positionierelemente 32 auf, die aufragende Zentrierelemente 32a und Distanzelemente 32b umfassen. Die Ringwand 11 der Saugfilterkartusche 1 sitzt auf den Distanzelementen 32b auf, so dass Rohwasser durch den Zwischenraum zwischen Grundplatte 31 und Ringwand 11 in die Saugfilterkartusche 1 einströmen kann. Zwischen den Positionierelementen 32 werden auf diese Weise Einlasskanäle 36 gebildet (siehe Fig. 2b).

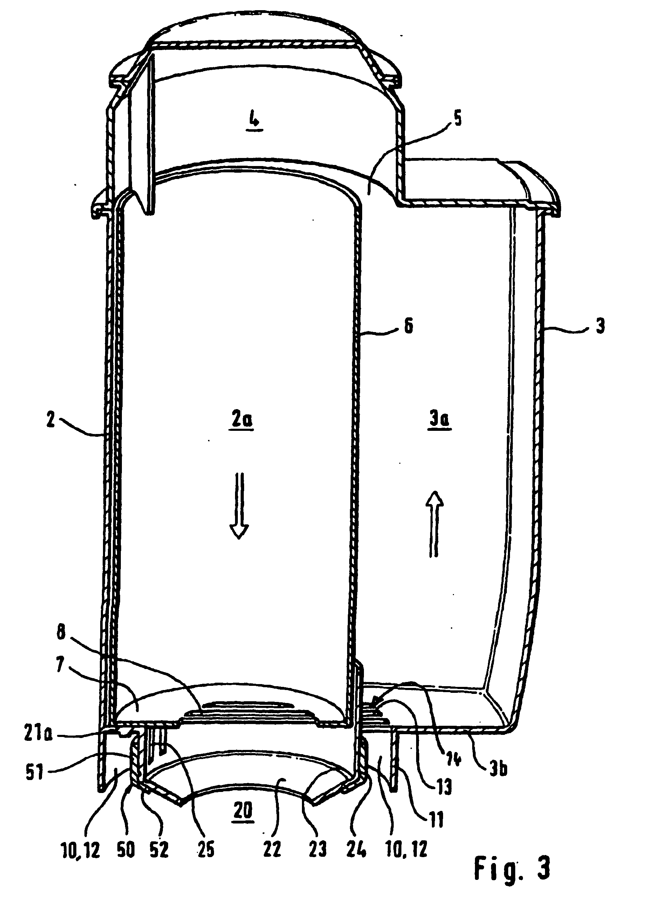

In der Fig. 3 ist die Saugfilterkartusche 1, mit dem Schnapprand 22 in seiner unteren Schnappposition dargestellt, in der der Schnapprand 22 auf dem Bund 52 des Stellrings 50 aufliegt. Zur Abdichtung zwischen Stellring 50 und Auslaufstutzen 21 weist der Stellring 50 an seinem zylindrischen Abschnitt 51 einen umlaufenden Dichtwulst 24 auf.

In der Fig. 4 ist der untere Bereich der Saugfilterkartusche 1 vergrößert und perspektivisch dargestellt. Der drehbare Stellring 50 ist mit den zweiten Öffnungen 53 versehen, die den ersten Öffnungen 25 gegenüberliegen. Durch Drehung des Stellrings 50 können diese zweiten Öffnungen 53 mit den ersten Öffnungen 25 zur Deckung gebracht werden. Je nachdem wie groß der Grad der Überdeckung der Öffnungen 25, 53 ist, wird mehr oder weniger Rohwasser von dem Einlaufbereich 10 unmittelbar in die Auslauföffnung 20 eingeleitet.

In der Fig. 5 ist das Sitzelement 30 perspektivisch dargestellt. Es ist zu sehen, dass der Rohrstutzen 33 von einem Kranz von Positionierungselementen 32 umgeben ist.

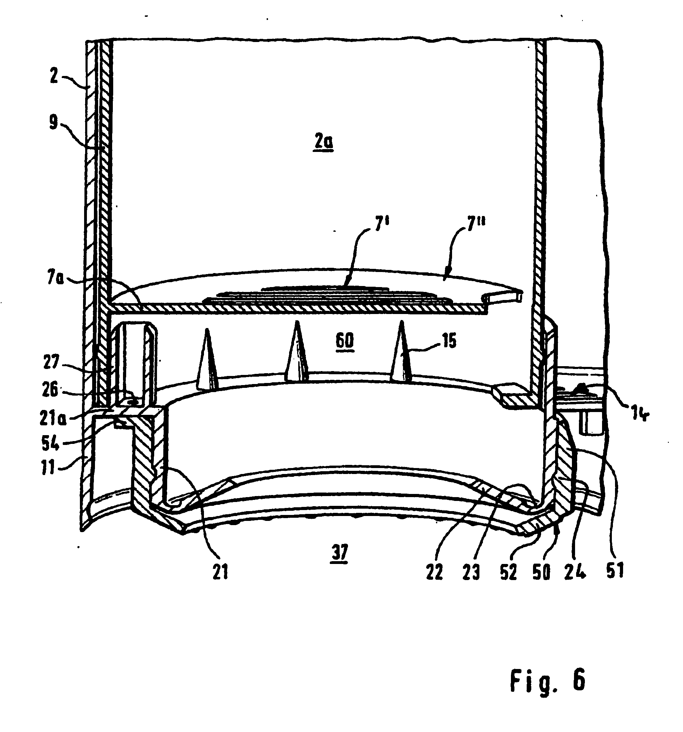

In der Fig. 6 ist der untere Teil einer Saugfilterkartusche 1 gemäß einer weiteren Ausführungsform, die die Bypassöffnungen betrifft, dargestellt.

Im Unterschied zu der zuvor beschriebenen Ausführungsform befindet sich mindestens eine Bypassöffnung 26, vorzugsweise als Bohrungen, in der Bodenwand 21 a, die den Auslaufstutzen 21 mit der Ringwand 11 verbindet. Diese Bodenwand 21 a ist auch in den Figuren 2a, 2b, 3 und 4 dargestellt, wobei die Bodenwand 7 des Abströmeinsatzes 9 auf dieser Bodenwand 21 a aufliegt. In der in Figur 6 gezeigten Ausführungsform fehlt die Bodenwand 7, so dass die Bodenwand 21 a die Abströmkammer 2a nach unten abschließt. Durch die Bypassöffnungen 26, wobei in der Figur 6 lediglich eine Bypassöffnung 26 zu sehen ist, wird das in den Ringkanal 12 einströmende Rohwasser nicht unmittelbar in die Auslassöffnung 37 geleitet, sondern in das Innere der Abströmkammer 2a, die beabstandet zur Bodenwand 21 a einen für Flüssigkeit durchlässigen Zwischenboden 7a aufweist. Die Durchlässigkeit des Zwischenbodens 7a ist auf einen zentralen Bereich 7' beschränkt. Durch den Zwischenboden 7a wird im unteren Bereich der Abströmkammer 2a eine weitere Kammer 60 abgetrennt. Innerhalb dieser Kammer 60 sind Steigrohre 27 angeordnet, die die Bypassöffnungen 26 umgeben. Das Rohwasser wird durch diese Steigrohre 27 nach oben geleitet und durch den undurchlässigen Ringbereich 7" des Zwischenbodens 7a umgelenkt. In der Kammer 60 kann ein Filtermaterial angeordnet sein, beispielsweise ein Vlies, das von den Nadeln 15 gehalten wird.

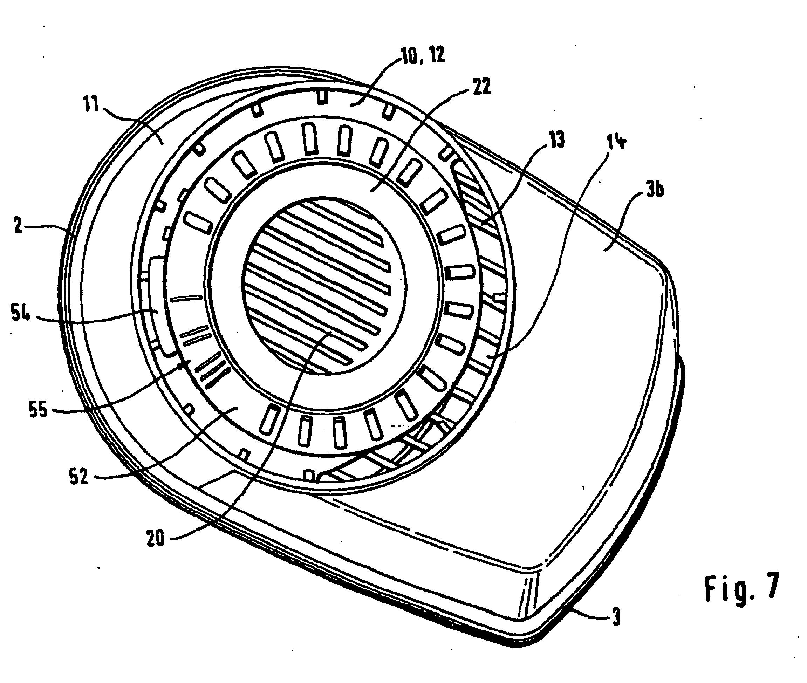

Zum Verschließen bzw. Freigeben der Bypassöffnungen 26 ist der Stellring 50 am oberen Rand mit einem Verschlusselement 54 versehen, das an den Stellring 50 angeformt ist. Um unerwünschte Bypässe zu verhindern, liegt dieses Verschlusselement 54 dichtend an der Unterseite der Bodenwand 21 a an. Das Verschlusselement 54 besteht aus einem teilringförmigen Bund, wie dies in der Fig. 7 zu sehen ist. Durch Verdrehen des Stellrings 50 können die Bypassöffnungen 26 freigegeben oder verschlossen werden.

In Fig. 7 ist eine perspektivische Unteransicht auf die Auslauföffnung 20 der Saugfilterkartusche 1 dargestellt. Der Bund 52 ist mit Markierungen 55 versehen, die dem Benutzer anzeigen, in welcher Stellung sich der Stellring 50 befindet. Der Stellring 50 kann vom Benutzer mittels der Riffelung verdreht werden, so dass er die gewünschte Flüssigkeitsmenge, die in die Auslauföffnung 20 umgeleitet werden soll, einstellen kann. Außerdem ist das Verschlusselement 54 als teilringförmiger Bund des Stellrings 50 zu sehen.

### Bezugszeichenliste

- 1: Saugfilterkartusche
- 2: zentrales Gehäuseteil
- 2a: Abströmkammer
- 3: angesetztes Gehäuseteil
- 3a: Aufströmkammer
- 3b: Bodenwand
- 4: Verbindungskammer
- 5: Verbindungsöffnung
- 6: Trennwand
- 7: Bodenwand
- 7': durchlässiger Bereich
- 7": undurchlässiger Bereich
- 7a: Zwischenboden
- 8: Bodengitter
- 9: Abströmeinsatz
- 10: Einlaufbereich
- 11: Ringwand
- 12: Ringkanal
- 13: Gitter
- 14: Einlauföffnung
- 15: Nadeln

- 20: Auslauföffnung
- 21a: Bodenwand
- 21: Auslaufstutzen
- 22: Schnapprand
- 23: Filmscharnier
- 24: Dichtwulst
- 25: erste Öffnung
- 26: Bypassöffnung
- 27: Steigrohr

- 30: Sitzelement
- 31: Grundplatte
- 32: Positionierelement
- 32a: Zentrierelement
- 32b: Distanzelement
- 33: Rohrstutzen
- 33a: unterer Abschnitt
- 33b: oberer Abschnitt
- 34: Steg
- 35: Ringschulter
- 36: Einlasskanal
- 37: Auslassöffnung

- 50: Stellring
- 51: zylindrischer Abschnitt
- 52: Bund
- 53: zweite Öffnung
- 54: Verschlusselement
- 55: Markierung

- 60: Kammer

## Patentansprüche

1. Filterkartusche (1), insbesondere Saugfilterkartusche, mit mindestens einer mindestens ein Filtermittel aufweisenden Aufströmkammer (3a) und mindestens einer mindestens ein Filtermittel aufweisenden Abströmkammer (2a), die im oberen Bereich miteinander in Verbindung stehen, und mit einem, mindestens einer Einlauföffnung (14) vorgeschalteten Einlaufbereich (10) und einer Auslauföffnung (20), die beide im Bodenbereich angeordnet sind, **dadurch gekennzeichnet, dass** die Auslauföffnung (20) mit dem Einlaufbereich (10) über einen Bypass verbunden ist, der in einem unteren Abschnitt der Aufströmkammer (3a) und/oder der Abströmkammer (2a) oder unterhalb von Aufström- und/oder Abströmkammer (2a) angeordnet ist.

2. Filterkartusche (1) nach Anspruch 1, **dadurch gekennzeichnet, dass** der Querschnitt des Bypasses einstellbar ist.

3. Filterkartusche nach Anspruch 1 oder 2, **dadurch gekennzeichnet, dass** die Auslauföffnung (20) einen Auslaufstutzen (21) aufweist, und
dass der Einlaufbereich (10) den Auslaufstutzen (21) ringförmig umgibt.

4. Filterkartusche (1) nach Anspruch 3, **dadurch gekennzeichnet, dass** der Auslaufstutzen (21) mindestens einen drehbaren Stellring (50) aufweist.

5. Filterkartusche nach Anspruch 3 oder 4, **dadurch gekennzeichnet, dass** der Auslaufstutzen (21) mindestens eine erste Öffnung (25) aufweist.

6. Filterkartusche (1) nach einem der Ansprüche 4oder 5, **dadurch gekennzeichnet, dass** der Stellring (50) einen zylindrischen, am Auslaufstutzen (21) anliegenden Abschnitt (51) aufweist, an dem sich ein Verschlusselement oder in dem sich mindestens eine zweite Öffnung (53) befindet, die mit der ersten Öffnung (25) zur Deckung bringbar ist.

7. Filterkartusche (1) nach einem der Ansprüche 5 bis 7, **dadurch gekennzeichnet, dass** die zweite Öffnung (53) des Stellrings (50) ≥ der ersten Öffnung (25) des Auslaufstutzens (21) ist.

8. Filterkartusche (1) nach Anspruch 5 oder 6, **dadurch gekennzeichnet, dass** der zylindrische Abschnitt (51) dichtend an der Außenseite des Auslaufstutzens (21) anliegt.

9. Filterkartusche nach einem der Ansprüche 4 bis 8, **dadurch gekennzeichnet, dass** in der Bodenwand (7, 21 a) der Abströmkammer (2a) mindestens eine Bypassöffnung (26) angeordnet ist.

10. Filterkartusche nach Anspruch 9, **dadurch gekennzeichnet, dass** in der Abströmkammer (2a) ein die Bypassöffnung (26) umgebendes Steigrohr (27) angeordnet ist.

11. Filterkartusche nach Anspruch 9 oder 10, **dadurch gekennzeichnet, dass** der Stellring (50) ein an der Unterseite der Bodenwand (7, 21a) anliegendes Verschlusselement (54) aufweist.

12. Filterkartusche nach Anspruch 11, **dadurch gekennzeichnet, dass** das Verschlusselement (54) ein teilringförmiger Bund ist.

13. Filterkartusche nach einem der Ansprüche 1 bis 12, **dadurch gekennzeichnet, dass** die Abströmkammer (2a) einen flüssigkeitsdurchlässigen Zwischenboden (7a) aufweist.

14. Filterkartusche (1) nach einem der Ansprüche 3 bis 13, **dadurch gekennzeichnet, dass** in der Auslauföffnung (20) ein nach innen weisender, umlaufender Schnapprand (22) vorgesehen ist, der von einer ersten unteren Schnappposition in eine obere zweite Schnappposition und umgekehrt umklappbar ist.

15. Filterkartusche (1) nach Anspruch 14, **dadurch gekennzeichnet, dass** der Schnapprand (22) am unteren Ende des Auslaufstutzens (21) angelenkt ist.

16. Filterkartusche (1) nach Anspruch 14 oder 15, **dadurch gekennzeichnet, dass** der Schnapprand (22) über ein Filmscharnier (23) angelenkt ist.

17. Filterkartusche (1) nach einem der Ansprüche 14 bis 16, **dadurch gekennzeichnet, dass** der Schnapprand (22) ein sich radial nach innen erstreckender flacher Randstreifen ist.

18. Filterkartusche (1) nach einem der Ansprüche 10 bis 17, **dadurch gekennzeichnet, dass** der Stellring (50) einen in die Auslauföffnung (20) ragenden abgewinkelten Bund (52) aufweist, an dem der Schnapprand (22) in seiner ersten unteren Schnappposition anliegt.

19. Filterkartusche (1) nach einem der Ansprüche 4 bis 18, **dadurch gekennzeichnet, dass** der Stellring (50) dichtend auf dem Auslaufstutzen (21) anliegt.

20. Filterkartusche (1) nach einem der Ansprüche 1 bis 19, **dadurch gekennzeichnet, dass** die Aufströmkammer (3a) ein Wirbelbett (4) und die Abströmkammer (2a) ein Festbett (5) aufweisen.

21. Filterkartusche nach einem der Ansprüche 13 bis 20, **dadurch gekennzeichnet, dass** in der zwischen Bodenwand (7, 21 a) und Zwischenboden (7a) gebildeten Kammer (60) ein Filtermedium angeordnet ist.

22. Filterkartusche nach Anspruch 21, **dadurch gekennzeichnet, dass** das Filtermedium in der Kammer (60) ein Aktivkohlevlies ist.

23. Filterkartusche (1) nach einem der Ansprüche 3 bis 22, **dadurch gekennzeichnet, dass** der Auslaufstutzen (21) und/oder der Stellring (50) mindestens einen sich um den Umfang erstreckenden Dichtwulst (24) aufweist.

## Claims

1. A filter cartridge (1), especially a suction filter cartridge, with at least one upflow chamber (3a) having at least one filtering means, and with at least one downflow chamber (2a) having at least one filtering means, which chambers (3a, 2a) communicate with one another in the upper region, and with an inlet region (10) arranged upstream of at least one inlet opening (14) and with an outlet opening (20) which are both arranged in the bottom region, **characterised in that** the outlet opening (20) is connected to the inlet region (10) via a bypass arranged in a lower portion of the upflow chamber (3a) and/or the downflow chamber (2a) or underneath the upflow and/or downflow chamber (2a).

2. A filter cartridge (1) according to claim 1, **characterised in that** the cross-section of the bypass is adjustable.

3. A filter cartridge according to claim 1 or 2, **characterised in that** the outlet opening (20) has an outlet sleeve (21) and **in that** the inlet region (10) surrounds the outlet sleeve (21) in an annular manner.

4. A filter cartridge (1) according to claim 3, **characterised in that** the outlet sleeve (21) has at least one rotatable adjusting ring (50).

5. A filter cartridge according to claim 3 or 4, **characterised in that** the outlet sleeve (21) has at least one first opening (25).

6. A filter cartridge (1) according to either claim 4 or claim 5, **characterised in that** the adjusting ring (50) has a cylindrical portion (51) which rests against the outlet sleeve (21) and on which a closing member is located or in which at least one second opening (53) is provided, which can be brought into coincidence with the first opening (25).

7. A filter cartridge (1) according to any one of claims 5 to 7, **characterised in that** the second opening (53) in the adjusting ring (50) is ≥ the first opening (25) in the outlet sleeve (21).

8. A filter cartridge (1) according to claim 5 or 6, **characterised in that** the cylindrical portion (51) rests against the outside of the outlet sleeve (21) in a sealed manner.

9. A filter cartridge according to any one of claims 4 to 8, **characterised in that** at least one bypass opening (26) is provided in the bottom wall (7, 21a) of the downflow chamber (2a).

10. A filter cartridge according to claim 9, **characterised in that** a rising pipe (27) surrounding the bypass opening (26) is arranged in the downflow chamber (2a).

11. A filter cartridge according to claim 9 or 10, **characterised in that** the adjusting ring (50) has a closing member (54) resting against the underside of the bottom wall (7, 21a).

12. A filter cartridge according to claim 11, **characterised in that** the closing member (54) is a part-annular collar.

13. A filter cartridge according to any one of claims 1 to 12, **characterised in that** the downflow chamber (2a) has a liquid-permeable intermediate bottom (7a).

14. A filter cartridge (1) according to any one of claims 3 to 13, **characterised in that** an inwardly extending, circumferential snap edge (22) is provided in the outlet opening (20) and is tiltable from a first, lower snap position into a second, upper snap position and vice versa.

15. A filter cartridge (1) according to claim 14, **characterised in that** the snap edge (22) is articulated on the lower end of the outlet sleeve (21).

16. A filter cartridge (1) according to claim 14 or 15, **characterised in that** the snap edge (22) is articulated via a film hinge (23).

17. A filter cartridge (1) according to any one of claims 14 to 16, **characterised in that** the snap edge (22) is a flat edge strip extending radially inwards.

18. A filter cartridge (1) according to any one of claims 10 to 17, **characterised in that** the adjusting ring (50) has an angled collar (52) which projects into the outlet opening (20) and against which the snap edge (22) rests in its first, lower snap position.

19. A filter cartridge (1) according to any one of claims 4 to 18, **characterised in that** the adjusting ring (50) rests on the outlet sleeve (21) in a sealed manner.

20. A filter cartridge (1) according to any one of claims 16 to 19, **characterised in that** the upflow chamber (3a) has a fluidised bed (4) and the downflow chamber (2a) has a fixed bed (5).

21. A filter cartridge according to any one of claims 13 to 20, **characterised in that** a filtering medium is arranged in the chamber (60) formed between the bottom wall (7, 21a) and the intermediate bottom (7a).

22. A filter cartridge according to claim 21, **characterised in that** the filtering medium in the chamber (60) is an activated-carbon mat.

23. A filter cartridge (1) according to any one of claims 3 to 22, **characterised in that** the outlet sleeve (21) and/or the adjusting ring (50) has at least one sealing bead (24) extending around the circumference.

## Revendications

1. Cartouche de filtre (1), en particulier cartouche de filtre à aspiration, comprenant au moins une chambre de flux ascendant (3a) présentant au moins un moyen filtrant et au moins une chambre de flux descendant (2a) présentant au moins un moyen filtrant, qui sont en liaison l'une avec l'autre dans la zone supérieure, et une zone d'entrée (10) placée en amont d'au moins une ouverture d'entrée (14) et une ouverture de sortie (20), qui sont disposées toutes deux dans la zone de fond, **caractérisée en ce que** l'ouverture de sortie (20) est reliée à la zone d'entrée (10) par un by-pass, qui est disposé dans une partie inférieure de la chambre de flux ascendant (3a) et/ou de la chambre de flux descendant (2a) ou au-dessous de la chambre de flux ascendant et/ou de la chambre de flux descendant (2a).

2. Cartouche filtrante (1) selon la revendication 1, **caractérisée en ce que** la section du by-pass est réglable.

3. Cartouche filtrante (1) selon la revendication 1 ou 2, **caractérisée en ce que** l'ouverture d'évacuation (20) comporte une tubulure d'évacuation (21) et **en ce que** la zone d'admission (10) entoure de manière annulaire la tubulure d'évacuation (21).

4. Cartouche filtrante (1) selon la revendication 3, **caractérisée en ce que** la tubulure d'évacuation (21) comporte au moins une bague de réglage (50) rotative.

5. Cartouche filtrante (1) selon la revendication 3 ou 4, **caractérisée en ce que** la tubulure d'évacuation (21) comporte au moins un premier orifice (25).

6. Cartouche filtrante (1) selon la revendication 4 ou 5, **caractérisée en ce que** la bague de réglage (50) comporte une partie (51) cylindrique, qui est en appui contre la tubulure d'évacuation (21) et sur laquelle est situé un élément de fermeture ou dans laquelle est réalisé au moins un deuxième orifice (53), qui peut être aligné avec le premier orifice (25).

7. Cartouche filtrante (1) selon l'une quelconque des revendications 5 à 7, **caractérisée en ce que** le deuxième orifice (53) de la bague de réglage (50) est supérieur ou égal au premier orifice (25) de la tubulure d'évacuation (21).

8. Cartouche filtrante (1) selon la revendication 5 ou 6, **caractérisée en ce que** la partie (51) cylindrique est en appui étanche contre la face extérieure de la tubulure d'évacuation (21).

9. Cartouche filtrante (1) selon l'une quelconque des revendications 4 à 8, **caractérisée en ce qu'**au moins un orifice de by-pass (26) est disposé dans la paroi du fond (7, 21a) de la chambre de flux descendant (2a).

10. Cartouche filtrante (1) selon la revendication 9, **caractérisée en ce qu'**un tube de montée (27), entourant l'orifice de by-pass (26), est agencé dans la chambre de flux descendant (2a).

11. Cartouche filtrante (1) selon la revendication 9 ou 10, **caractérisée en ce que** la bague de réglage (50) comporte un élément de fermeture (54) en appui contre la face inférieure de la paroi du fond (7, 21a).

12. Cartouche filtrante (1) selon la revendication 11, **caractérisée en ce que** l'élément de fermeture (54) est un collet avec une forme partiellement annulaire.

13. Cartouche filtrante (1) selon l'une quelconque des revendications 1 à 12, **caractérisée en ce que** la chambre de flux descendant (2a) comporte un fond intermédiaire (7a) perméable aux liquides.

14. Cartouche filtrante (1) selon l'une quelconque des revendications 3 à 13, **caractérisée en ce que** dans l'ouverture d'évacuation (20) est prévu un bord encliquetable (22) périphérique, orienté vers l'intérieur, lequel peut être rabattu depuis une première position encliquetée inférieure dans une deuxième position encliquetée supérieure et inversement.

15. Cartouche filtrante (1) selon la revendication 14, **caractérisée en ce que** le bord encliquetable (22) est articulé contre l'extrémité inférieure de la tubulure d'évacuation (21).

16. Cartouche filtrante (1) selon la revendication 14 ou 15, **caractérisée en ce que** le bord encliquetable (22) est articulé par l'intermédiaire d'un film formant charnière (23).

17. Cartouche filtrante (1) selon l'une quelconque des revendications 14 à 16, **caractérisée en ce que** le bord encliquetable (22) est une bande de bordure plate s'étendant dans le sens radial vers l'intérieur.

18. Cartouche filtrante (1) selon l'une quelconque des revendications 10 à 17, **caractérisée en ce que** la bague de réglage (50) comporte un collet (52) coudé, qui s'engage dans l'ouverture d'évacuation (20) et sur lequel le bord encliquetable (22) prend appui dans sa première position encliquetée inférieure.

19. Cartouche filtrante (1) selon l'une quelconque des revendications 4 à 18, **caractérisée en ce que** la bague de réglage (50) est en appui étanche sur la tubulure d'évacuation (21).

20. Cartouche filtrante (1) l'une quelconque des revendications 1 à 19 **caractérisée en ce que** la chambre de flux ascendant (3a) comporte un lit fluidisé (4) et la chambre de flux descendant (2a) comporte un lit fixe (5).

21. Cartouche filtrante (1) selon l'une quelconque des revendications 13 à 20, **caractérisée en ce qu'**un agent de filtrage est agencé dans la chambre (60) formée entre la paroi du fond (7, 21a) et le fond intermédiaire (7a).

22. Cartouche filtrante (1) selon la revendication 21, **caractérisée en ce que** l'agent de filtrage dans la chambre (60) est un non-tissé de charbon actif.

23. Cartouche filtrante (1) selon l'une quelconque des revendications 3 à 22, **caractérisée en ce que** la tubulure d'évacuation (21) et/ou la bague de réglage (50) comportent au moins un bourrelet d'étanchéité (24) qui s'étend sur tout le pourtour.
